# EUROPEAN PATENT SPECIFICATION

(11) **EP 1 742 213 B1**
(45) Date of publication and mention of the grant of the patent: **04.02.2009**
(21) Application number: 05026870.5
(22) Date of filing: 08.12.2005
(51) Int. Cl.: G11B 7/243

(54) **Optical recording medium**
Optisches Aufzeichnungsmedium
Support d'enregistrement optique

(30) Priority: 08.07.2005 KR 2005061630
(43) Date of publication of application: 10.01.2007
(73) Proprietor: LG Electronics Inc., Yongdungpo-Gu Seoul 150-010 (KR)
(72) Inventor: Lee, Kwang Lyul, Seoul 135-120 (KR)
(74) Representative: von Hellfeld, Axel

(56) References cited:
- EP-A- 1 300 836
- JP-A- 6 171 236
- JP-A- 62 204 442
- US-A1- 2005 047 302
- US-A1- 2005 047 306

## Description

### BACKGROUND OF THE INVENTION

### 1. Field of the Invention

The present invention relates to an optical recording medium. In particular, the present invention relates to a recordable optical recording medium that can densely record data as well as has high recording stability.

### 2. Description of the Related Art

With the advent of multimedia age comprehensively dealing with video signal including moving picture and stop picture, audio signal, and computer data information, package media including all kinds of discs like CD and DVD have been widely used. Recently, there have been active efforts to apply an optical recording medium to such recording media as mobile phone, digital camera, broadcasting, and movie.

The optical recording medium is divided into read-only memory (ROM) optical recording medium, recordable optical recording medium capable of recording information only once, and rewritable optical recording medium capable of writing, reading, and deleting information repeatedly.

The recordable optical recording medium can be applied for data backup or storage of broadcasting, movie, etc. As recording layer material of the recordable optical recording medium, organic material like dye or inorganic material may be used. Only, in case of using organic material as the recording layer material, a problem may be occurred in long term storage of data recorded in the optical recording medium.

As recording mechanisms of the recordable optical recording medium, a) a pit is generated when the recording layer material is burned, b) a pit is formed from expansion of the volume as the recording layer material is decomposed, c) a new phase is formed by solidifing after the recording layer is melted, and d) a new material (for example, silicide, germanium compound, or antimony compound) is formed by reaction on the contact surface with foreign material. Also, these mechanisms may be occurred multiply. In case the recording mark is generated by multiple mechanisms, if a laser beam is irradiated onto the optical recording medium, first material and second material in the recording layer may be mixed and changed to form different material from the recording layer.

In this case, data are recorded by optical property changed in the recording layer material, and the recorded data can be identified by change of reflexibility according to changed optical property before and after recording.

In order for the multiple mechanisms to occur in the optical recording medium, the optical recording medium needs to have an internal structure to generate such mechanisms and a combination of the recording layer material suitable to the internal structure.

On the other hand, the record medium for next generation requires very high recording density and transmittance velocity for data. The size of recording mark of the optical recording medium should be smaller than the present size to increase the recording density recorded in the optical recording medium. Thus, the laser wavelength irradiated onto the optical recording medium should be reduced to 450nm or less, and the numerical aperture should be increased to 0.7 or more. Also, the data transmittance velocity should be much higher than the present one of between 30Mbps and 35Mbps.

In case of BD (Blu-ray Disc) that is one recording media for next generation, a recording layer material having jitter characteristic acceptable within the ranges of recording linear velocity of between 5.28m/s and 10.56m/s and laser power of between 3mW and 7mW at 405nm wavelength should be included in the optical recording medium.

Particularly, the recordable optical recording medium having the above characteristic requires combination of the recording layer material, characterized in that, i) the contrast between recording mark and space in the optical-recording medium should be high, ii) the recording sensibility should be high, iii) recorded mark should be stable, and iv) recording characteristics including noise and jitter of recording mark should be satisfied in BD system.

Also, in case the recording mark is made inside the optical recording medium by irradiated laser, combination of recording layer material is required to prevent the laser power needed for making recording mark from being too high.

Document US 2005/0047302 A1 concerns an optical information recording medium. The medium is comprised of a reflective layer, a second dielectric layer, a recording layer, a first dielectric layer and a light transmitting layer. The layers are sequentially disposed on a substrate.

### SUMMARY OF THE INVENTION

The present invention concerns optical recording mediums having the features of claim 1 and 8.

An object of the present invention is to provide an optical recording medium that recording mark can be made by multiple mechanisms which different materials included in an information recording layer react at the contacting surface of each other to be formed as a new material.

Another object of the present invention is to provide an optical recording medium that has high recording sensibility and big contrast between recording mark and space as well as satisfies characteristic of BD.

Another object of the present invention is to provide an optical recording medium that has superior stability of recording mark and superior recording characteristic of jitter as well as satisfies characteristic of BD. Another object of the present invention is to provide an optical recording medium which the laser power necessary for making recording mark is low

The optical recording medium according to one embodiment of the present invention includes a substrate, a reflective layer located on the upper side of the substrate and reflecting an incident laser beam, and an information recording layer located on the reflective layer. The information recording layer includes a first layer containing Au, and a second layer containing at least one element selected from the group consisting of Si, Ge, C, Sn and Zn.

The optical recording medium according to another embodiment of the present invention includes a substrate, a reflective layer located on the upper side of the substrate and reflecting an incident laser beam, at least two information recording layers located on the reflective layer, and a separation layer formed between the information recording layers. The information recording layer includes a first layer containing Au, and a second layer containing at least one element selected from the group consisting of Si, Ge, C, Sn and Zn.

As described above, the optical recording medium of the present invention may provide high recording density and high transmittance velocity suitable for BD system by combining elements of the recording layer substance.

Also, the optical recording medium of the present invention may provide high recording sensibility and the contrast between recording mark and space as well as record data in high density.

Further, the optical recording medium of the present invention may have low laser power in making recording mark as well as superior stability of recording mark and recording character.

### BRIEF DESCRIPTION OF THE DRAWINGS

The above and other features and advantages of the present invention will become readily apparent by reference to the following detailed description when considered in conjunction with the accompanying drawings wherein:
FIG. 1 is a sectional view illustrating the structure of the optical recording medium according to a first embodiment of the present invention;
FIG. 2 is a sectional view illustrating one form of generated record mark in case of land recording to the optical recording medium of FIG. 1;
FIG. 3 is a sectional view illustrating one form of generated record mark in case of groove recording to the optical recording medium of FIG. 1;
FIG. 4 is a sectional view illustrating one form of generated record mark in case of including a recording sensibility promotion layer in the optical recording medium according to a second embodiment of the present invention;
FIG. 5 is a sectional view illustrating one form of generated record mark in case of laminating a first layer and a second layer in turn in the information recording layer of the optical recording medium according to a third embodiment of the present invention;
FIG. 6 is a sectional view illustrating the structure of the optical recording medium according to a fourth embodiment of the present invention;
FIG. 7 is a view illustrating result to measure recording sensibility as DC annealing power to each test of Table 1;
FIG. 8 is a view illustrating reflexibility change result according to the optical recording medium of the present invention by combination of the recording layer of Ge(150Å)/Au(50Å) in case of changing combination of thickness of upper dielectric layer and lower dielectric layer;
FIG. 9 is a view illustrating reflexibility change result according to the optical recording medium of the present invention by combination of the recording layer of Ge(90Å)/Au(30Å) in case of changing combination of thickness of upper dielectric layer and lower dielectric layer;
FIG. 10 is a view illustrating reflexibility change rate according to the optical recording medium of the present invention by combination of the recording layer of Ge(90Å)/Au(30Å) in case of changing combination of thickness of upper dielectric layer and lower dielectric layer;
FIG. 11 is a view illustrating laser recording pulse waveform used for data recording of the optical recording medium for performance evaluation of the optical recording medium according to one embodiment of the present invention;
FIG. 12 is a view illustrating result of RF eye pattern of the optical recording medium by combination of Test 3 in Table. 1;
FIG. 13 is a view illustrating probability distribution of a signal reproduced in the optical recording medium by combination of Test 3 in Table. 1.

### DESCRIPTION OF EMBODIMENTS

Hereinafter, preferred embodiments of the present invention will be explained in more detail with reference to the accompanying drawings.

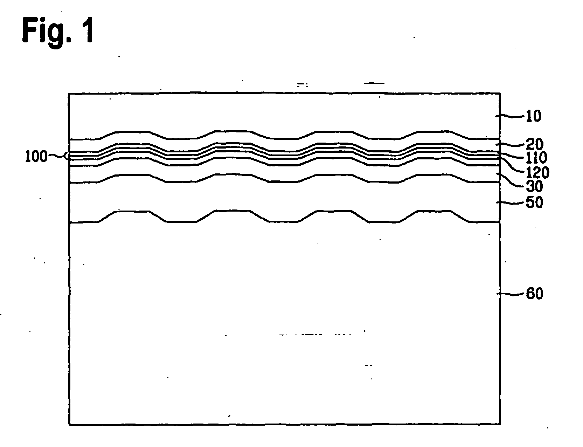

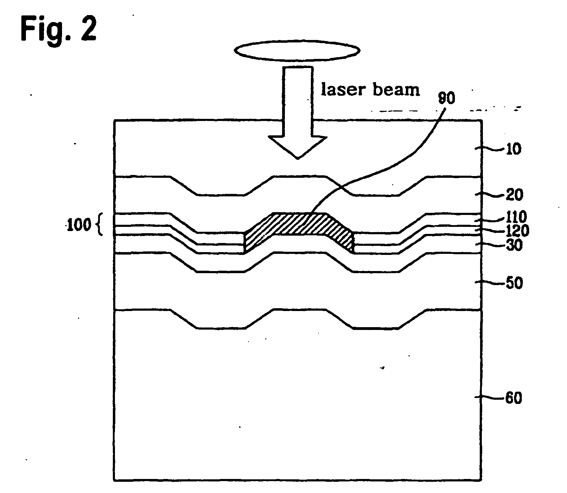

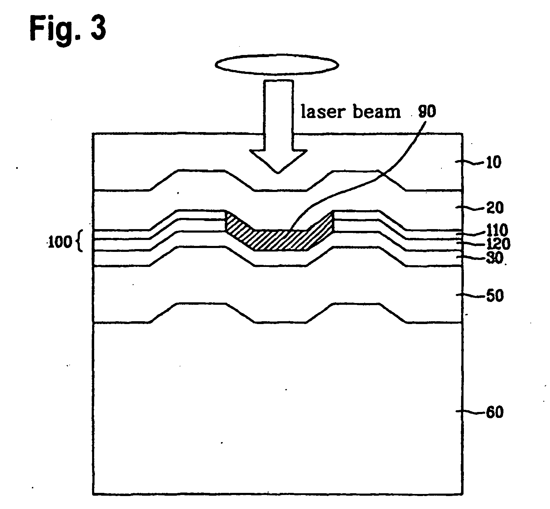

FIG. 1 is a sectional view illustrating the structure of the optical recording medium according to a first embodiment of the present invention. FIG. 2 is a sectional view illustrating one form of generated record mark in case of land recording to the optical recording medium of FIG. 1. And, FIG. 3 is a sectional view illustrating one form of generated record mark in case of groove recording to the optical recording medium of FIG. 1.

In FIG 1, the optical recording medium of the present invention includes a substrate 60, a reflective layer 50, and an information recording layer 100. It is desirable to further include an optical transmittance layer 10 and dielectric layers 20, 30. The information recording layer 100 includes a first layer 110 and a second layer 120.

The substrate 60 plays a role to support physical form of the optical recording medium. As material of the substrate 60, ceramic, glass, resin, etc. are generally used, and polycarbonate resin is preferable.

The reflective layer 50 is deposited on the substrate 60, reflects laser beam incident to the optical recording medium through the optical transmittance layer 10, and sends back the beam to the direction of the optical transmittance layer 10. Therefore, it is desirable that the optical transmittance layer 10 is consisted of a material having high reflexibility or alloy to which highly reflexible material is added.

The information recording layer 100 is deposited on the reflective layer 50, and includes two and more layers 110, 120.

Each material included in the first layer 110 and the second layer 120 forms a new material in mixture when the laser beam is irradiated thereon. The new material has totally different reflexibility from other materials around.

The positions of the first layer 110 and the second layer 120 in the information recording layer 100 of FIG. 1 may be changed each other. That is, it is not necessary that the first recording layer 110 is positioned to receive the first incident laser beam.

The first layer 110 contains Au as main element by 50 and more atomic percents. Also, preferably, the first layer 110 contains at least one element selected from the group consisting of Si, Sb, Te, Ge, Al, Cu, Pb, Nb as additional element (B). That is, it is preferable that the first recording layer 110 contains a compound in the form of (Au)_{1-X}B_{X}(0.1≤ X≤ 0.5).

The second layer 120 contains at least one element selected from the group consisting of Si, Ge, C, Sn and Zn. Preferably, the second layer 120 contains one element selected from the group consisting of Si, Ge, C, Sn and Zn as main element by 50 or more atomic percents.

When the laser beam is irradiated, the materials of the first layer 110 and the second layer 120 make a recording mark in the mechanism that they react each other at the contact surface to form a new material.

Also, it is preferable that the dielectric layer 20, 30 is laminated on one or more sides of the information recording layer 100, and is consisted of ZnS-Si02.

In case the dielectric layer 20 is laminated on the side on which the laser beam is first irradiated in both contact sides of the information recording layer 100 (hereinafter, referred to as "lower dielectric layer"), the lower dielectric layer 20 plays a role to control reflexibility and contrast of the optical recording medium. Also, the lower dielectric layer 20 prevents damage of the optical transmittance layer 10 from temperature increase of the information recording layer 100. The lower dielectric layer 20 can be laminated to perform this function enough, and the preferable thickness of the lower dielectric layer 20 is 80nm or less.

In case the dielectric layer 30 is laminated on closer side to the substrate 60 in both contact sides of the information recording layer 100 (hereinafter, referred to as "upper dielectric layer"), the upper dielectric layer 30 controls reflexibility and contrast of the optical recording medium. Also, in case the information recording layer 100 is irradiated on the laser beam, the upper dielectric layer 30 controls temperature distribution of the information recording layer 100 so that heat produced in the information recording layer 100 is emitted to the outside in a proper rate. The upper dielectric layer 30 can be laminated to perform this function enough, and the preferable thickness of the upper dielectric layer 30 is 50nm or less.

FIG. 2 and FIG. 3 illustrate forms recorded to the optical recording medium in case of recording by irradiating the laser beam to the optical recording medium according to the first embodiment of the present invention.

Groove and land are formed on the surface of the information recording layer 100, and guide the laser beam irradiated onto the optical recording medium.

Land recording means that data are recorded onto the convex part of the information recording layer 100 as shown in FIG. 2, and recording mark 90 is formed on the part that the laser beam first arrives at in the surface of the information recording layer 100.

Groove recording means that data are recorded onto the concave part of the information recording layer 100 as shown in FIG. 3, and recording mark 90 is formed on the part that the laser beam later arrives at in the surface of the information recording layer 100.

Therefore, both land recording and groove recording are possible in the optical recording medium according to the present invention.

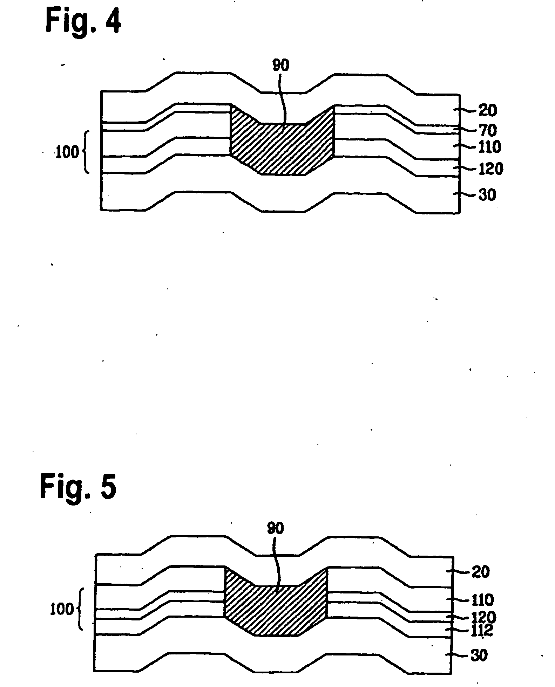

FIG. 4 is a sectional view illustrating one form of generated record mark in case a recording sensibility promotion layer is included in the optical recording medium according to a second embodiment of the present invention.

In FIG. 4, the recording sensibility promotion layer 70 may be laminated around or inside the information recording layer 100 in the optical recording medium according to the second embodiment of the present invention.

It is desirable that the recording sensibility promotion layer 70 contains at least one element selected from the group consisting of Sn, Zn, Pb, Bi, Tl, Te, Se, S, Al, Ga, Ge, Cd, I, and In. These elements react earlier than material of the information recording layer 100 because their melting point is low when the laser beam is irradiated, and latent heat generated by state change at the time of reaction may be partially supplied for the heat necessary for reaction of the first layer 110 or the second layer 120.

Thus, in case the recording sensibility promotion layer 70 is laminated, the laser power necessary at the time of generating the recording mark 90 may be lowered.

The recording sensibility promotion layer 70 may be disposed on a side on which the laser beam is first irradiated, or closer side to the substrate 60 in both contact sides of the information recording layer 100, or between the first layer 110 and the second layer 120.

However, it is most desirable that the recording sensibility promotion layer 70 is laminated to contact a side on which the laser beam is first irradiated in both contact sides of the information recording layer 100 as shown in FIG. 4.

The other constitution is the same as the optical recording medium according to the first embodiment.

FIG. 5 is a sectional view illustrating one form of generated record mark in case the first layer and the second layer are laminated in turn to the information recording layer of the optical recording medium according to a third embodiment of the present invention.

In FIG. 5, the optical recording medium according to the third embodiment of the present invention includes one or more first layers 110, 112, and one or more second layer 120 in the information recording layer 100. The first recording layers 110, 112 and the second layers 120 are laminated in turn so that their contact sides become two or more.

If laminated so, the reaction area between the first layer 110, 112 and the second layer 120 is increased so that the mark 90 is easily generated in the thickness direction of the optical recording medium.

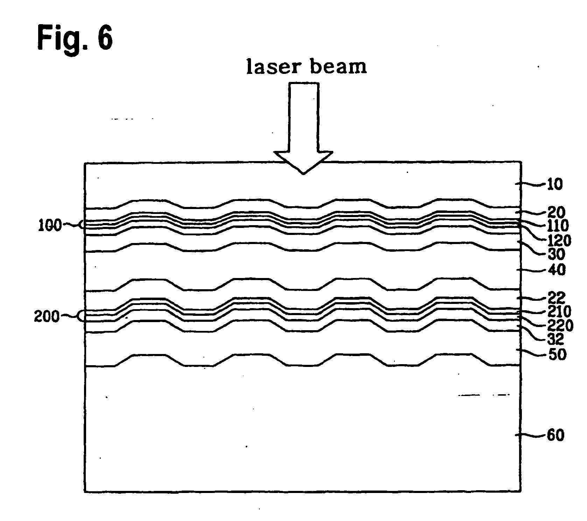

FIG. 6 is a sectional view illustrating the structure of the optical recording medium according to a fourth embodiment of the present invention.

In FIG. 6, the optical recording medium according to the fourth embodiment of the present invention includes a substrate 60, a reflective layer 50, a separation layer 40 located between two and more information recording layers 100, 200 and each information recording layer 100, 200, and lower dielectric layer 20, 22 and upper dielectric layer 30, 32 laminated close to each information recording layer 100, 200.

Recording mark 90 may be formed in the information recording layers 100, 200 as described FIG. 2 to FIG. 5. Also, the lower dielectric layer 20, 22 and the upper dielectric layer 30, 32 may be laminated on a side on which the laser beam is first irradiated or a closer side to the substrate 60 in each information recording layer 100, 200 as shown in FIG. 1.

The information recording layers 100, 200 need not have the same structure. Thus, it is possible to let one or more first layers 110 and one or more second layers 120 be included in any one information recording layer (for example 100) in two or more information recording layers 100, 200, and the contact sides between the first layer 110 and the second layer 120 become two and more as the first layer 110 and the second layer 120 are laminated in turn. Also, it is possible to make the recording sensibility promotion layer 70 be laminated, or further included, in only one information recording layer 100, 200.

In case the information recording layers 100, 200 are two or more, it is also possible to make the sum of thicknesses of first layer 110 and second layer 120 in one information recording layer 100 different from that in another information recording layer 200 except the above information recording layer.

Also, it is desirable that the ratio of thickness of first layer 110 to second layer 120 in one information recording layer 100 is different from that in another information recording layer 200 except the above information recording layer.

That is, it is desirable that in terms of transmittance, the thickness of each of the information recording layers 100, 200 is different. After the recording mark 90 is formed on the information recording layer 100 on which the laser beam is first incident, it is enough for the recording mark 90 to be formed on the other information recording layer 200 on which laser beam is second incident, with maintaining the laser power within a regulated range.

For example, if the thickness of the information recording layer 100 on which the laser beam is first incident corresponds to 40% and 60% of transmittance, the information recording layer 200 on which the laser beam is second incident may be formed in the thickness having 1% or less of transmittance.

Hereinafter, the test results to the optical recording medium according to the first to fourth embodiments will be described.

First, the structure and recording layer material of the optical recording media used for the test will be described.

The optical recording media used in the tests include a substrate 60 of a doughnut form of 15mm of internal diameter, 120mm of external diameter, and 1.1mm of thickness, and 0.32µm of track pitch having land and groove is formed on the substrate.

The substrate 60 is made of polycarbonate, and multiple thin layers are laminated on the substrate 60 in the order of reflective layer 50 made of Ag alloy, upper dielectric layer 30 consisted of ZnS-SiO2, second layer 120, first layer 110, and lower dielectric layer 20 consisted of ZnS-SiO2.

Also, the optical transmittance layer 10 is adhered onto the lower dielectric layer 20 by a polycarbonate cover sheet of 80µm with PSA glue of 20µm.

The conditions of the above tests according to the first to fourth embodiments of the present invention are described below.

In the tests, the constant linear velocity of the optical recording media is 5.28m/s, and the measuring position of the optical recording media was 30mm from the inner circumference. The data recording to the optical recording medium was groove recording, the wavelength of laser beam used therein is 408nm, and the reproduction power is set at 35mW. Also, as test apparatus, ODU-1000 of Pulstec Co., Ltd. was used.

The reflective layer 50 used for the above test is laminated with Ag alloy of the thickness of 70nm, and on the reflective layer 50, the upper dielectric layer (ZnS-SiO₂, 30), the second layer 120, the first layer 110, and the lower dielectric layer (ZnS-SiO₂, 20) are laminated in order.

In Table 1, combination of materials of layers 110, 120 in the optical recording medium as shown above and test results thereof are explained below.

**[Table 1]**

| NO | Thickness of Au(the first layer) (Å) | Thickness of Ge(the second layer) (Å) | Thickness of the lower dielectric layer (Å) | Thickness of the upper dielectric layer (Å) | 8T modulation(I8ₚₚ/I8 H) (%) | determination | DC annealing power (mW) | determination | Saturated power range (ΔmW) | determination | Mark stability |
|---|---|---|---|---|---|---|---|---|---|---|---|
| 1 | 50 | 150 | 680 | 180 | 25 | X | 2.7 | Δ | 3.5 | X | ○ |
| 2 | 50 | 150 | 460 | 180 | 73→50 | ○ | 5.0 | X | 3.0 | X | X |
| 3 | 30 | 90 | 460 | 180 | 50 | ○ | 1.3 | ○ | 1.75 | ○ | Δ |

The first layer 110 and the second layer 120 each contained Au and Ge 50 and more atomic percents as main element in Tests 1, 2 and 3. The lower dielectric layer 20 and the upper dielectric layer 30 were consisted of ZnS-SiO₂.

Test 1 shows a case of laminating the upper dielectric layer 30 of 180Å , the second layer 120 of 150Å , the first layer 110 of 50Å , and the lower dielectric layer 20 of 680Å . In Test 2, the lower dielectric layer 20 was laminated in 460Å , differently from Test 1. In Test 3, differently from Test 2, the first layer 110 was 30Å and the second layer 120 was 90Å . A said above, it is desirable that the ratio of thickness of the first layer 110 to the second layer 120 is two and more, and so the ratio of thickness of the first layer 110 to the second layer 120 in the lamination was made as 3 in each test.

The test standards according to each test combination are difference of reflexibility of the optical recording medium according to 8T modulation, value of DC annealing power, saturated power range, and mark stability. The results according to each standard of Table 1 are marked as '○', '□' or '×' in the right column of each test standard (own column for mark stability) in the order of test combination showing favorable result.

First, 8T modulation indicates difference of reflexibility between space and mark of the optical recording medium.

That is, the difference (I8pp) between minimum reflexibility value and maximum reflexibility value to 8T modulation pulse of the laser beam divided by maximum reflexibility value (I8H) is expressed in percent (%).

In the 8T modulation test of laser beam, the difference of reflexibility is the first standard of optical recording medium. Thus, as its difference of reflexibility is bigger, it is more appropriate as optical recording medium.

The difference of reflexibility between space and mark is the largest in Test 2 and Test 3, and in Test 2, the difference was a little changed.

DC annealing power is a determination standard that can indirectly confirm whether an optical recording medium having optimized structure can be recorded as prescribed recording power (Pw). BD should generate the recording mark 90 at the laser recording power within the range of less than 7mW to 1X, 2X velocity of the optical recording medium.

To indirectly confirm that, the optical recording medium is determined to have proper recording sensibility to the prescribed laser power if the power measured when any change in the first layer 110 and the second layer 120 is begun is less than 3mW.

Hereinafter, a specific method of measuring DC annealing power as determination standard will be described.

First, laser beam of space power (Ps(mW)) is irradiated to the optical recording medium. Pulse of the laser beam is single pulse type, not multiple pulse type. And, in case the laser beam is irradiated, the original size of reflexibility of the optical recording medium is measured as laser power to initiate change in the oscilloscope. The size of such measured laser power is the value of DC annealing power. In the test, the optical recording medium is determined to be optimized if the DC annealing power is less than 2.5mW.

In the test result of the DC annealing power, the recording sensibility of Test 3 is the better than that of Test 1 and Test 2. Thus, the thickness of sum of the first layer 110 and the second layer 120 has more effect to the recording sensibility than the thickness of the dielectric layer 20, 30. In the recording power, it is preferable that the thickness of the information recording layer 100 is thin.

The saturated power range is a determination standard to indirectly confirm the range of temperature until the whole information recording layer 100 reacts since the layer 100 begins to react and the reacting area is widened to the direction of thickness of the optical recording medium.

If the saturated power range is high, the laser power range to get optimized recording characteristic may be out of prescribed condition though the temperature to begin the reaction is low. Also, recording control is difficult in the medium temperature range since the change of reflexibility of the optical recording medium is big. That is, the reflexibility of the optical recording medium to the laser power at the time of recording to the optical recording medium should be changed rapidly in a narrow power range.

Thus, to select a thickness combination that the temperature change of the recording layers 110, 120 is completed in a narrow laser power range, the thickness combination of the recording layers 110, 120 that the saturated power range is less than 2mW is determined as most proper combination. In the test, Test 3 showed best result.

As a determination standard of the test, mark stability is a standard to determine whether the recording mark 90 can be maintained for a long time without any change in time. The size of recording mark 90 should be maintained without growing bigger or smaller in time under effect of the laser beam of regenerative power or at room temperature when the recording mark 90 was formed to the optical recording medium by the laser pulse of 8T modulation.

The mark stability according to the optical recording medium of the present invention is satisfactory as a whole, but Test 1 is the best thickness combination.

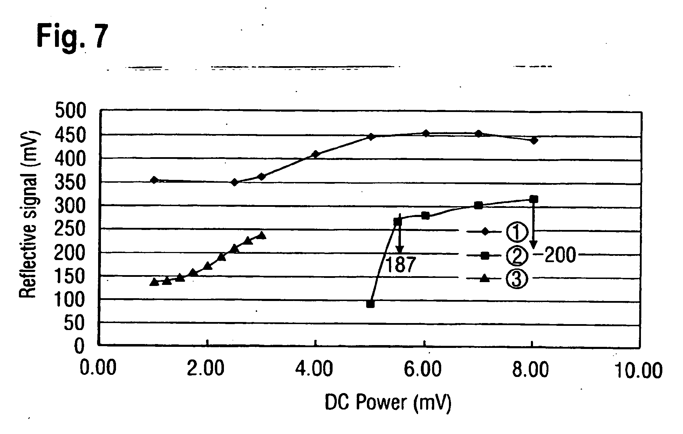

FIG. 7 is a view illustrating result measuring DC annealing power to the optical recording medium having the thickness combinations of Tests 1, 2, and 3 of Table. 1.

Test 3 shows best in recording sensibility. That is, the thickness combination of each recording layer of Test 3 showed signal reflected in the smallest DC annealing power.

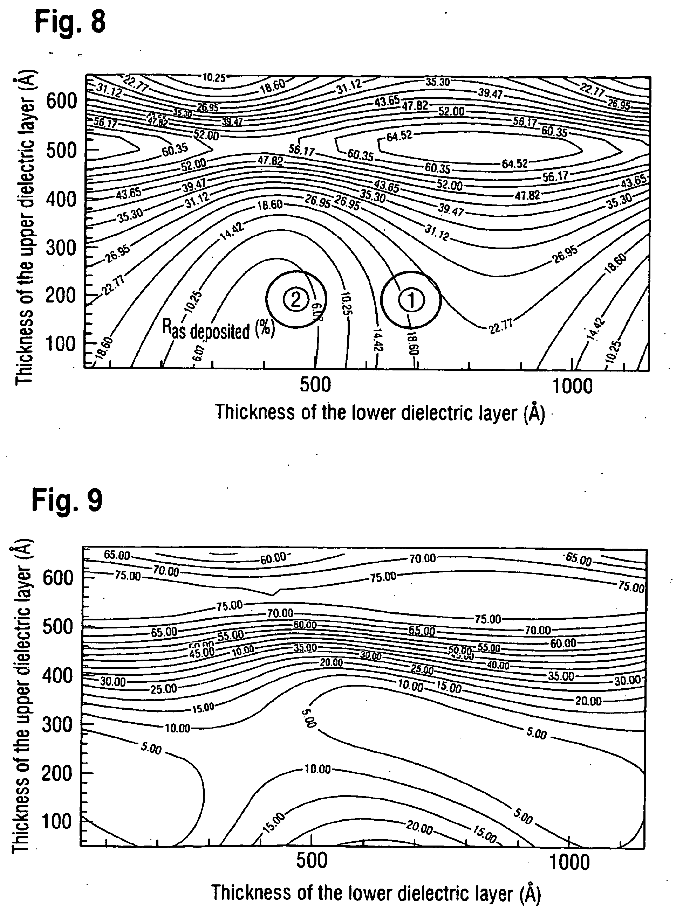

FIG. 8 is a view illustrating the mock test result of reflexibility change of the optical recording medium according to thickness combination of the upper dielectric layer and the lower dielectric layer when the thickness combination of first layer and second layer in the recording layer is Ge(150Å)/Au(50Å), and the reflective layer is 700Å. FIG. 9 is a view illustrating the test result of reflexibility change of the optical recording medium according to thickness combination of the upper dielectric layer and the lower dielectric layer when the thickness combination of first layer and second layer in the recording layer is Ge(90Å)/Au(30Å), and the reflective layer is 700Å.

Preferable design area shown in the mock test was illustrated as circle having a number according to Test 1, 2 and 3.

FIG. 8 and FIG. 9 confirm that in case the thickness of the lower dielectric layer 20 (the horizontal axis of FIG. 8 and FIG. 9) is 80nm or less, the reflexibility and contrast of the optical recording medium may be sufficiently controlled.

Since the reflexibility according to thickness of the lower dielectric layer 20 has a period, when the thickness is 80nm or more, the reflexibility for thickness thinner than 80nm is repeated again. Also, when thickness of the lower dielectric layer 20 is increased, the heat may affect the information recording layer 100 to bring undesirable effect. Therefore, it is desirable that the thickness of the lower dielectric layer 20 is 80nm or less.

In FIG. 8 and FIG. 9, when the thickness of the upper dielectric layer 30 in the vertical axis is 50nm or more, the contrast of the optical recording medium may lower. Also, if the upper dielectric layer 30 is thick, it is hard to control the shape of the recording mark 90 and the length of each mark since the heat generated in the information recording layer 100 is not discharged well. Therefore, it is desirable that the thickness of the upper dielectric layer 30 is 50nm or less.

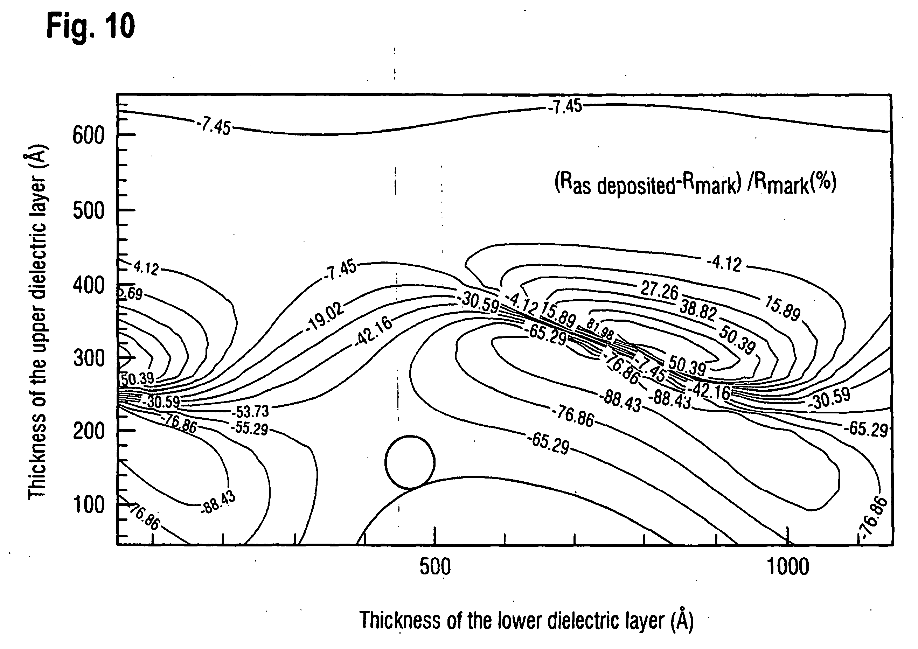

FIG. 10 is a view illustrating the reflexibility in percentage (%) resulted from the difference of reflexibility before recording and reflexibility of recording mark after recording divided by reflexibility before recording according to thickness of the upper dielectric layer and the lower dielectric layer when the thickness combination of first layer and second layer in the recording layer is Ge(90Å)/Au(30Å), and the reflective layer is 700 Å

In FIG. 10, the circled area is one that the difference of reflexibility before and after recording is big, and was designed as a result of the mock test.

Next, jitter test result according to the optical recording medium of the present invention having the structure described in Test 3 of Table 1 will be described.

First, the channel bit clock is set at 66MHz, and the recording velocity of the optical recording medium is set at 5.28m/s, as jitter measurement conditions of the optical recording medium according to the present invention. The capacity of the optical recording medium was 23.3 giga bytes per information recording layer 100, and TA520 of Yokogawa Co. was used as jitter measuring equipment. The number of test sampling for measuring jitter was 30,000, the measuring position of the optical recording medium was selected at 30mm from the inner circumference of the optical recording medium, and both land recording and groove recording were conducted to the optical recording medium. Also, the wavelength of the recording laser beam to the optical recording medium was 408nm.

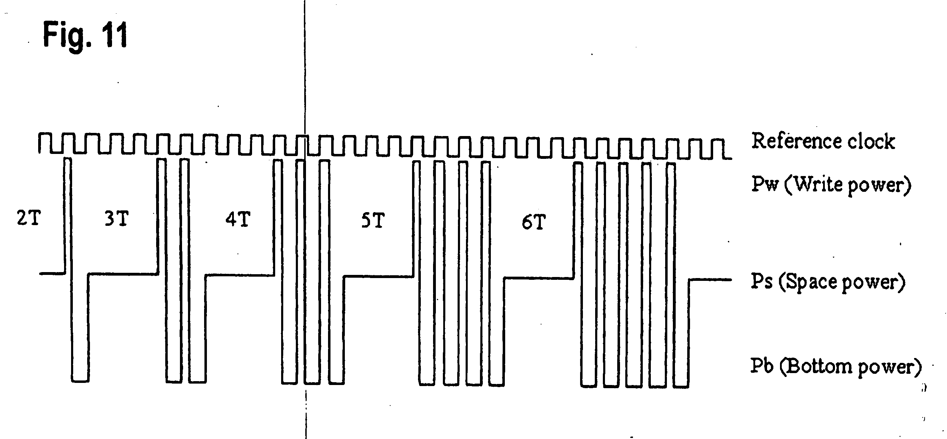

FIG. 11 is a view illustrating laser recording pulse waveform used for the data recording of the optical recording medium according to the present invention.

The recording power (Pw) of the laser pulse used for record of optical recording medium was 4.1mW, the space power (Ps) was 1.0mW, and the bottom power (Pb) was 0.4mW The laser recording pulse has random multi pulse from 2T to 6T, and recording was done by modulating the pulse to N-1 partition pulse to each recording pulse.

Hereinafter, the eye pattern of the optical recording medium according to the combination of each layer in Test 3 will be described.

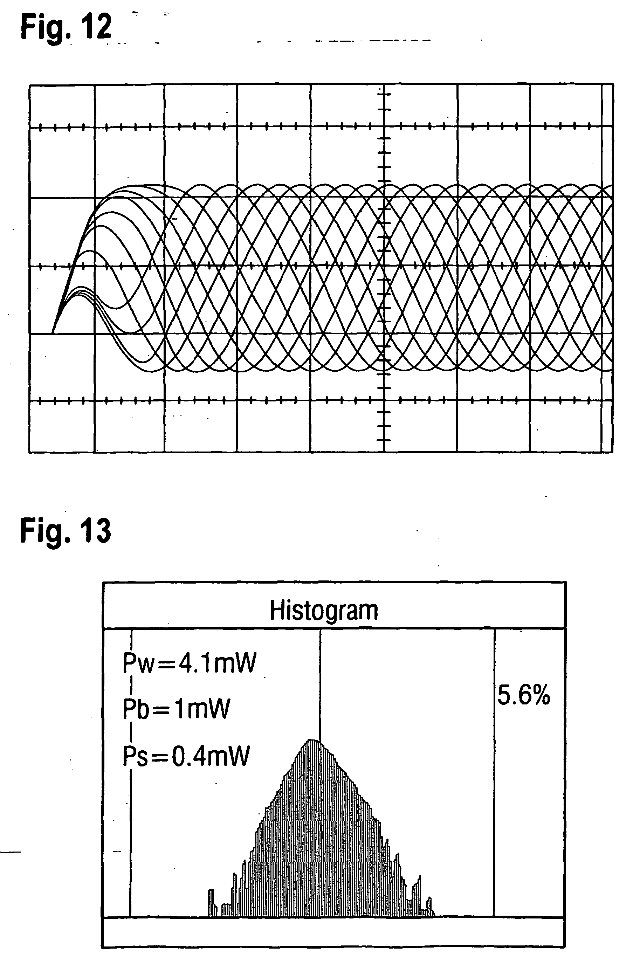

FIG. 12 illustrates result of RF eye pattern of the optical recording medium having the combination of each layer in Test 3.

In FIG. 12, in case the laser beam irradiates to the optical recording medium of Test 3, the reproduced signal has LTH (Low to High) polarity

In FIG. 12, the eye pattern is clear enough to see bright RF eye pattern. Thus, the present optical recording medium can be suitably used as BD due to small rate of jitter resulting from that the changing point of regenerating signal does not agree to the changing point of original signal on the time axis.

FIG. 13 is a view illustrating probability distribution of signal reproduced in the optical recording medium having combination of Test 3 in Table. 1.

In FIG. 13, the value (σ /T) dividing standard deviation (σ) by the reference clock (T) of laser beam is 5.6%. The smaller the standard deviation (σ) is, the better the optical recording medium is evaluated. For general BD, in case the value (σ /T) is less than 6.5%, the optical recording medium is evaluated as suitable ○ ptical medium. Therefore, the optical recording medium according to the present invention sufficiently satisfies BD system.

The superiority of performance according to the optical recording medium of the present invention is shown in a case that the information recording layer 100 is one (1), and is same when the information recording layers 100, 200 are two and more. At least one of the information recording layers 100, 200 may be combined by constitutional element, thickness ratio, sum of thickness, etc., as shown above.

From the preferred embodiments for the present invention, it is noted that modifications and variations can be made by a person skilled in the art in light of the above teachings. Therefore, it should be understood that changes may be made for a particular embodiment of the present invention within the scope and the spirit of the present invention outlined by the appended claims.

## Claims

1. An optical recording medium for recording information by a mechanism forming a substance having different reflectivity from surrounding substance in an information recording layer through an irradiated laser beam, comprising:
a substrate (60);
a reflective layer (50) located on the upper side of the substrate (60), and reflecting an incident laser beam; and
an information recording layer (100) located on the reflective layer (50),
wherein the information recording layer (100) includes:
a first layer (110) containing Au; and
a second layer (120) containing at least one element selected from the group consisting of Si, Ge, C, Sn and Zn and disposed between the reflective layer (50) and
the first layer (110), **characterized in that**
the first layer (110) contains a compound in the form of (Au)₁₋ₓBₓ(0.1≤X≤0.5),
wherein B contains at least one element selected from the group consisting of Si, Sb, Te, Ge, Al, Cu, Pb and Nb.

2. The optical recording medium of claim 1, wherein the first layer (110) contains at least one element selected from the group consisting of Si,Sb, Te, Ge, Al, Cu, Pb and Nb as additional element.

3. The optical recording medium of claim 1, wherein the information recording layer (100) includes at least one first layer (110) and at least one second layer (120), and the first layer and the second layer (120) are laminated in turn.

4. The optical recording medium of claim 1, wherein the information recording layer (100) further includes a recording sensibility promotion layer (70) formed on at least one side of the information recording layer (100) and containing at least one element selected from the group consisting of Sn, Zn, Pb, Bi, Tl, Te, Se, S, Al, Ga, Ge, Cd, I and In.

5. The optical recording medium of claim 1, further including a dielectric layer (20, 30) formed on at least one side of the information recording layer (100).

6. The optical recording medium of claim 5, wherein the thickness of the dielectric layer (20) formed on the first layer (110) is 80nm or less.

7. The optical recording medium of claim 5, wherein the thickness of the dielectric layer (30) formed on the second layer (120) is 50nm or less.

8. An optical recording medium for recording information by a mechanism forming a substance having different reflectivity from surrounding substance In an information recording layer through an irradiated laser beam, comprising:
a substrate (60);
a reflective layer (50) located on the upper side of the substrate (60) and rejecting an incident laser beam;
at least two information recording layers (100, 200) located on the reflective layer (50); and
a separation layer (40) formed between the information recording layers (100, 200), wherein each of the information recording layers (100, 200) includes:
a first layer (110, 210) containing Au; and
a second layer (120, 220) containing at least one element selected from the group consisting of Si, Ge C, Sn and Zn and disposed between the reflective layer (50) and
the first layer (110, 210); **characterized in that**
the first layer (110, 210) contains a compound in the form of (Au)₁ₓBₓ(0.1≤X≤0.5),
wherein B contains at least one element selected from the group consisting of Si, Sb, Te, Ge, Al, Cu, Pb and Nb.

9. The optical recording medium of claim 8, wherein the ratio of thickness of the first layer to the second layer in one of the information recording layers is different from that of the first layer to the second layer in another information recoding layer.

10. The optical recording medium of claim 8, wherein the sum of thickness of the first layer and the second layer in one of the information layers is different from that of the first layer and the second layer in another information recoding layer.

11. The optical recording medium of claim 8, wherein the information recording layer (100) includes at least one first layer (110) and at least one second layer (120), and the first layer (110) and the second layer (120) are laminated in turn.

12. The optical recording medium of claim 8, wherein one of the information recording layers (100, 200) further includes a recording sensibility promotion layer (70) containing at least one element selected from the group consisting of Sn, Zn, Pb, Bi, Tl, Te, Se, S, Al, Ga, Ge, Cd, I and In.

13. The optical recording medium of claim 12, wherein the recording sensibility promotion layer (70) is formed on at least one side of the information recording layer (100, 200).

14. The optical recording medium of claim 12, wherein the recording sensibility promotion layer (70) is formed between the first layer (110) and the second layer (120).

15. The optical recording medium of claim 8, further including a dielectric layer (20, 30) formed on at least one side of one of the information recording layers (100, 200).

16. The optical recording medium of claim 15, wherein the thickness of the dielectric layer (20) formed on the first layer (110) is 80nm or less.

17. The optical recording medium of claim 15, wherein the thickness of the dielectric layer (30) formed on the second layer (120) is 50nm or less.

## Patentansprüche

1. Optisches Aufzeichnungsmedium zum Aufzeichnen von Information durch einen Mechanismus, der durch einen ausgestrahlten Laserstrahl einen Stoff bildet, der ein unterschiedliches Reflexionsvermögen als umgebender Stoff in einer Informationsaufzeichnungsschicht aufweist, mit:
einem Substrat (60);
einer reflektierenden Schicht (50), die auf der Oberseite des Substrats (60) angeordnet ist und einen einfallenden Laserstrahl reflektiert; und
einer Informationsaufzeichnungsschicht (100), die auf der reflektierenden Schicht (50) angeordnet ist;
wobei die Informationsaufzeichnungsschicht (100) enthält:
eine erste Schicht (110), die Au umfasst; und
eine zweite Schicht (120), die mindestens ein Element ausgewählt aus der Gruppe bestehend aus Si, Ge, C, Sn und Zn umfasst und zwischen der reflektierenden Schicht (50) und der ersten Schicht (110) angeordnet ist, **dadurch gekennzeichnet, dass**
die erste Schicht (110) eine Zusammensetzung in der Form (Au)_{1-X}B_{X}(0.1≤X≤0.5) umfasst, wobei B mindestens ein Element ausgewählt aus der Gruppe bestehend aus Si, Sb, Te, Ge, Al, Cu, Pb und Nb umfasst.

2. Optisches Aufzeichnungsmedium nach Anspruch 1, bei dem die erste Schicht (110) mindestens ein Element ausgewählt aus der Gruppe bestehend aus Si, Sb, Te, Ge, Al, Cu, Pb und Nb als zusätzliches Element umfasst.

3. Optisches Aufzeichnungsmedium nach Anspruch 1, bei dem die Informationsaufzeichnungsschicht (100) mindestens eine erste Schicht (110) und mindestens eine zweite Schicht (120) enthält, und die erste Schicht und die zweite Schicht (120) der Reihe nach laminiert sind.

4. Optisches Aufzeichnungsmedium nach Anspruch 1, bei dem die Informationsaufzeichnungsschicht (100) ferner enthält eine Aufzeichnungsempfindlichkeitsunterstützungsschicht (70), die auf mindestens einer Seite der Informationsaufzeichnungsschicht (100) gebildet ist und mindestens ein Element ausgewählt aus der Gruppe bestehend aus Sn, Zn, Pb, Bi, Tl, Te, Se, S, Al, Ga, Ge, Cd, I und In umfasst.

5. Optisches Aufzeichnungsmedium nach Anspruch 1, ferner enthaltend eine dielektrische Schicht (20, 30), die auf mindestens einer Seite der Informationsaufzeichnungsschicht (100) gebildet ist.

6. Optisches Aufzeichnungsmedium nach Anspruch 5, bei dem die Dicke der auf der ersten Schicht (110) gebildeten dielektrischen Schicht (20) 80nm oder weniger beträgt.

7. Optisches Aufzeichnungsmedium nach Anspruch 5, bei dem die Dicke der auf der zweiten Schicht (120) gebildeten dielektrischen Schicht (30) 50nm oder weniger beträgt.

8. Optisches Aufzeichnungsmedium zum Aufzeichnen von Information durch einen Mechanismus, der durch einen ausgestrahlten Laserstrahl einen Stoff bildet, der ein unterschiedliches Reflexionsvermögen als umgebender Stoff in einer Informationsaufzeichnungsschicht aufweist, mit:
einem Substrat (60);
einer reflektierenden Schicht (50), die auf der Oberseite des Substrats (60) angeordnet ist und einen einfallenden Laserstrahl reflektiert;
mindestens zwei Informationsaufzeichnungsschichten (100, 200), die auf der reflektierenden Schicht (50) angeordnet sind; und
einer Trennschicht (40), die zwischen den Informationsaufzeichnungsschichten (100, 200) gebildet ist,
wobei jede der Informationsaufzeichnungsschichten (100, 200) enthält:
eine erste Schicht (110) umfassend Au; und
eine zweite Schicht (120), die mindestens ein Element ausgewählt aus der Gruppe bestehend aus Si, Ge, C, Sn und Zn umfasst und zwischen der reflektierenden Schicht (50) und der ersten Schicht (110) angeordnet ist; **dadurch gekennzeichnet, dass**
die erste Schicht (110) eine Zusammensetzung in der Form (Au)_{1-X}B_{X}(0.1≤X≤0.5) umfasst, wobei B mindestens ein Element ausgewählt aus der Gruppe bestehend aus Si, Sb, Te, Ge, Al, Cu, Pb und Nb umfasst.

9. Optisches Aufzeichnungsmedium nach Anspruch 8, bei dem das Dickeverhältnis zwischen der ersten Schicht und der zweiten Schicht in einer der Informationsaufzeichnungsschichten unterschiedlich zu jenem zwischen der ersten Schicht und der zweiten Schicht in einer anderen Informationsaufzeichnungsschicht ist.

10. Optisches Aufzeichnungsmedium nach Anspruch 8, bei dem die Summe der Dicken der ersten Schicht und der zweiten Schicht in einer der Informationsschichten unterschiedlich zu jener der ersten Schicht und der zweiten Schicht in einer anderen Informationsaufzeichnungsschicht ist.

11. Optisches Aufzeichnungsmedium nach Anspruch 8, bei dem die Informationsaufzeichnungsschicht (100) mindestens eine erste Schicht (110) und mindestens eine zweite Schicht (120) enthält, und die erste Schicht (110) und die zweite Schicht (120) der Reihe nach laminiert sind.

12. Optisches Aufzeichnungsmedium nach Anspruch 8, bei dem eine der Informationsaufzeichnungsschichten (100, 200) ferner eine Aufzeichnungsempfindlichkeitsunterstützungsschicht (70) enthält, die mindestens ein Element ausgewählt aus der Gruppe bestehend aus Sn, Zn, Pb, Bi, Tl, Te, Se, S, Al, Ga, Ge, Cd, I und In umfasst.

13. Optisches Aufzeichnungsmedium nach Anspruch 12, bei dem die Aufzeichnungsempfindlichkeitsunterstützungsschicht (70) auf mindestens einer Seite der Informationsaufzeichnungsschicht (100, 200) gebildet ist.

14. Optisches Aufzeichnungsmedium nach Anspruch 12, bei dem die Aufzeichnungsempfindlichkeitsunterstützungsschicht (70) zwischen der ersten Schicht (110) und der zweiten Schicht (120) gebildet ist.

15. Optisches Aufzeichnungsmedium nach Anspruch 8, ferner enthaltend eine dielektrische Schicht (20, 30), die auf mindestens einer Seite einer der Informationsaufzeichnungsschichten (100, 200) gebildet ist.

16. Optisches Aufzeichnungsmedium nach Anspruch 15, bei dem die Dicke der auf der ersten Schicht (110) gebildeten dielektrischen Schicht (20) 80nm oder weniger beträgt.

17. Optisches Aufzeichnungsmedium nach Anspruch 15, bei dem die Dicke der auf der zweiten Schicht (120) gebildeten dielektrischen Schicht (30) 50nm oder weniger beträgt.

## Revendications

1. Support d'enregistrement optique pour enregistrer des informations par un mécanisme formant une substance ayant une réflectivité différente d'une substance l'entourant dans une couche d'enregistrement d'informations par l'intermédiaire d'un faisceau laser projeté, comprenant :
un substrat (60) ;
une couche réfléchissante (50) située sur le côté supérieur du substrat (60), et réfléchissant un faisceau laser incident ; et
une couche d'enregistrement d'informations (100) située sur la couche réfléchissante (50),
dans lequel la couche d'enregistrement d'informations (100) inclut :
une première couche (110) contenant de l'Au ; et
une deuxième couche (120) contenant au moins un élément choisi parmi le groupe consistant en Si, Ge, C, Sn et Zn et disposée entre la couche réfléchissante (50) et la première couche (110) ; **caractérisé en ce que**
la première couche (110) contient un composé sous la forme de (Au)₁₋ₓBₓ(0.1≤X≤0.5),
dans lequel B contient au moins un élément choisi parmi le groupe consistant en Si, Sb, Te, Ge, Al, Cu, Pb et Nb.

2. Support d'enregistrement optique selon la revendication 1, dans lequel la première couche (110) contient au moins un élément choisi parmi le groupe consistant en Si, Sb, Te, Ge, Al, Cu, Pb et Nb comme élément additionnel.

3. Support d'enregistrement optique selon la revendication 1, dans lequel la couche d'enregistrement d'informations (100) inclut au moins une première couche (110) et au moins une deuxième couche (120), et la première couche et la deuxième couche (120) sont stratifiées tour à tour.

4. Support d'enregistrement optique selon la revendication 1, dans lequel la couche d'enregistrement d'informations (100) inclut en outre une couche de promotion de sensibilité d'enregistrement (70) formée sur au moins un côté de la couche d'enregistrement d'informations (100) et contenant au moins un élément choisi parmi le groupe consistant en Sn, Zn, Pb, Bi, Tl, Te, Se, S, Al, Ga, Ge, Cd, I et In.

5. Support d'enregistrement optique selon la revendication 1, incluant en outre une couche diélectrique (20, 30) formée sur au moins un côté de la couche d'enregistrement d'informations (100).

6. Support d'enregistrement optique selon la revendication 5, dans lequel l'épaisseur de la couche diélectrique (20) formée sur la première couche (110) est 80 nm ou moins.

7. Support d'enregistrement optique selon la revendication 5, dans lequel l'épaisseur de la couche diélectrique (30) formée sur la deuxième couche (120) est 50 nm ou moins.

8. Support d'enregistrement optique pour enregistrer des informations par un mécanisme formant une substance ayant une réflectivité différente d'une substance l'entourant dans une couche d'enregistrement d'informations par l'intermédiaire d'un faisceau laser projeté, comprenant :
un substrat (60) ;
une couche réfléchissante (50) située sur le côté supérieur du substrat (60), et réfléchissant un faisceau laser incident ;
au moins deux couches d'enregistrement d'informations (100, 200) situées sur la couche réfléchissante (50) ; et
une couche de séparation (40) formée entre les couches d'enregistrement d'informations (100, 200),
dans lequel chacune des couches d'enregistrement d'informations (100, 200) inclut :
une première couche (110) contenant de l'Au ; et
une deuxième couche (120) contenant au moins un élément choisi parmi le groupe consistant en Si, Ge, C, Sn et Zn et disposée entre la couche réfléchissante (50) et la première couche (110) ; **caractérisé en ce que**
la première couche (110) contient un composé sous la forme de (Au)₁₋ₓBₓ(0,1≤X≤0,5),
dans lequel B contient au moins un élément choisi parmi le groupe consistant en Si, Sb, Te, Ge, Al, Cu, Pb et Nb.

9. Support d'enregistrement optique selon la revendication 8, dans lequel le rapport d'épaisseur de la première couche sur la deuxième couche dans l'une des couches d'enregistrement d'informations est différent de celui de la première couche sur la deuxième couche dans une autre couche d'enregistrement d'informations.

10. Support d'enregistrement optique selon la revendication 8, dans lequel la somme de l'épaisseur de la première couche et de la deuxième couche dans l'une des couches d'enregistrement d'informations est différente de celle de la première couche et de la deuxième couche dans une autre couche d'enregistrement d'informations.

11. Support d'enregistrement optique selon la revendication 8, dans lequel la couche d'enregistrement d'informations (100) inclut au moins une première couche (110) et au moins une deuxième couche (120), et la première couche (110) et la deuxième couche (120) sont stratifiées tour à tour.

12. Support d'enregistrement optique selon la revendication 8, dans lequel l'une des couches d'enregistrement d'informations (100, 200) inclut en outre une couche de promotion de sensibilité d'enregistrement (70) contenant au moins un élément choisi parmi le groupe consistant en Sn, Zn, Pb, Bi, Tl, Te, Se, S, Al, Ga, Ge, Cd, I et In.

13. Support d'enregistrement optique selon la revendication 12, dans lequel la couche de promotion de sensibilité d'enregistrement (70) est formée sur au moins un côté de la couche d'enregistrement d'informations (100, 200).

14. Support d'enregistrement optique selon la revendication 12, dans lequel la couche de promotion de sensibilité d'enregistrement (70) est formée entre la première couche (110) et la deuxième couche (120).

15. Support d'enregistrement optique selon la revendication 8, incluant en outre une couche diélectrique (20, 30) formée sur au moins un côté de l'une des couches d'enregistrement d'informations (100, 200).

16. Support d'enregistrement optique selon la revendication 15, dans lequel l'épaisseur de la couche diélectrique (20) formée sur la première couche (110) est 80 nm ou moins.

17. Support d'enregistrement optique selon la revendication 15, dans lequel l'épaisseur de la couche diélectrique (30) formée sur la deuxième couche (120) est 50 nm ou moins.
